(19) Europäisches Patentamt
European Patent Office
Office européen des brevets

(11) Publication number : **0 424 007 B1**

# (12) EUROPEAN PATENT SPECIFICATION

(45) Date of publication of patent specification : **24.11.93 Bulletin 93/47**

(51) Int. Cl.$^5$ : **C09D 4/02**

(21) Application number : **90311042.7**

(22) Date of filing : **09.10.90**

## (54) Zero volatile organic content radiation curable silicone coatings.

(30) Priority : **18.10.89 US 423297**

(43) Date of publication of application : **24.04.91 Bulletin 91/17**

(45) Publication of the grant of the patent : **24.11.93 Bulletin 93/47**

(84) Designated Contracting States : **BE DE ES FR GB IT**

(56) References cited :
**WO-A-82/00295**
**US-A- 4 603 086**

(73) Proprietor : **DOW CORNING CORPORATION**
**3901 S. Saginaw Road**
**Midland Michigan 48686-0994 (US)**

(72) Inventor : **Revis, Anthony**
**9417 Garfield**
**Freeland, Michigan (US)**
Inventor : **Cottington, Levi James**
**21 Erie Court**
**Midland, Michigan (US)**

(74) Representative : **Laredo, Jack Joseph et al**
**Elkington and Fife Prospect House 8**
**Pembroke Road**
**Sevenoaks, Kent TN13 1XR (GB)**

**EP 0 424 007 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention deals with radiation curable silicone coating compositions which can be applied and will adhere to substantially all solid substrates by such commercially popular coating techniques as roller, spray, dip and flow coating, etc. The silicone coating compositions of this invention contain no water or organic solvent and are prepared using monofunctional acrylate monomers as reactive diluents. These coating compositions may be radiation cured onto solid substrates, especially polycarbonate, to yield uniform, gel free, abrasion resistant, transparent surfaces.

Organic solvents that evaporate during the applications of paints, coatings and inks contribute significantly to a wide variety of air quality problems. Sunlight is one of the key factors that cause these chemicals to react with each other, thus the term "photochemical smog." These polluting organic solvents are most commonly referred to as Volatile Organic Compounds (VOCs). Ozone is formed by photochemical reactions between nitrogen oxides from fuel combustion and VOCs. Elevated ozone concentrations reduce lung function, aggravate allergies, damage vegetation and cause eye irritations.

Consequently, the Environmental Protection Agency (EPA) and local Air Quality Management Districts have stepped up their efforts to regulate the amount of VOCs. Although silicone products for the coatings industry represent only a small segment of the total market, any reduction of VOCs from these products will help achieve acceptable environmental conditions and help prepare the industry for the probability of more stringent air pollution regulations in the future.

It would be highly desirable if a new solvent less resin system could be developed which would allow the use of aqueous dispersions of colloidal silica in which a high silica content may be maintained along with a viscosity low enough to allow coatings to be applied in thicknesses of 5 microns or less with commercially popular techniques.

The present inventors have discovered that monofunctional acrylate monomers are very effective in reducing the viscosity of such amino-organofunctional, acryloxy-functional and/or glycidoxyfunctional silane coating compositions. The monofunctional acrylate monomers have a much lower viscosity than multifunctional acrylate monomers. Therefore, they have a greater effect in decreasing the viscosity of a solventless resin and thus, are preferred in high silica containing coating compositions.

The silica content has been shown to be a critical factor in the formation of hard, abrasion resistant coatings. The present inventors have demonstrated that optimum levels of colloidal silica improve the abrasion resistance of similar coating compositions. Thus, higher levels of colloidal silica may be maintained if monofunctional acrylate monomers are used. To achieve a similar decrease in the viscosity where multifunctional acrylate monomers are used, greater amounts must necessarily be added which have the deleterious effect of dramatically altering the percentage of silica in the coating composition. Reducing the silica content decreases the abrasion resistant properties of the coatings.

It is one object of the present invention to provide a solventless protective coating for solid substrates.

Another object of this invention is to provide a electron beam or ultraviolet light radiation curable coating composition that has a viscosity low enough to be applied by such commercially popular coating techniques as roller, spray, dip and flow coating.

Still another object of the present invention is to provide a solvent free silicone coating composition in which aqueous dispersions of colloidal silica may be used.

These and other objects are accomplished herein by a solventless radiation curable coating composition comprising:

(A) at least one multifunctional acrylate monomer;

(B) an amino-organofunctional silane selected from the group consisting of

(i) an amino-organofunctional silane or mixtures thereof, selected from the group consisting of $X_uSi(QNZH)_{4-u}$ and $X_uSi[Q(NHQ^1)_vNZH]_{4-u}$,

(ii) mixtures of (i) with an acryloxy-functional silane selected from the group consisting of

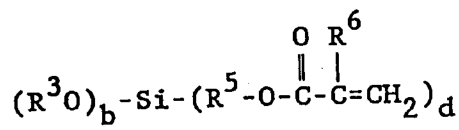

and

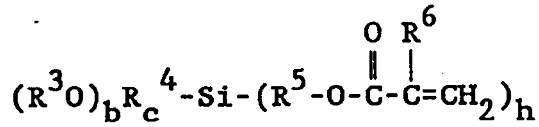

(iii) mixtures of (i) with a glycidoxy-functional silane selected from the group consisting of

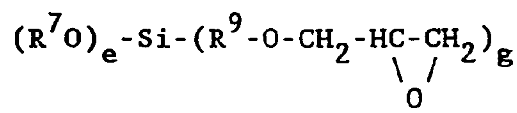

and

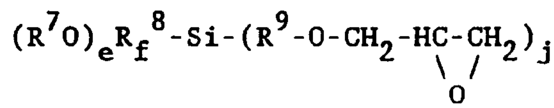

(iv) mixtures of (ii) and (iii);

wherein:

X is selected from alkoxy groups having 1-6 carbon atoms;
Q and $Q^1$ are the same or different divalent hydrocarbon groups;
Z is a hydrogen or a monovalent hydrocarbon group;
X is selected from alkoxy groups having 1-6 carbon atoms;
$R^3$ and $R^4$ are the same or different monovalent hydrocarbon radicals;
$R^5$ is a divalent hydrocarbon radical having from 2 to 8 carbon atoms;
$R^6$ is hydrogen or a monovalent hydrocarbon radical;
$R^7$ and $R^8$ are the same or different monovalent hydrocarbon radicals;
$R^9$ is a divalent hydrocarbon radical having from 2 to 8 carbon atoms;
u is an integer from 1 to 3;
v is an integer from 1 to 6;
b is an integer from 1 to 3;
c is an integer from 1 to 2;
d is an integer equaling 4-b;
e is an integer from 1 to 3;
f is an integer from 1 to 2;
g is an integer equaling 4-e;
h is an integer equaling 4-b-c;
j is an integer equaling 4-e-f;

(C) aqueous dispersion of colloidal silica; and

(D) acrylate monomer of the formula

$$H_2C{=}C(R^1)COOR^2$$

wherein:

$R^1$ is hydrogen or a monovalent hydrocarbon radical;

$R^2$ is selected from the group consisting of hydrogen, a monovalent hydrocarbon radical having from 1 to 6 carbon atoms and a monovalent hydrocarbon radical having from 1 to 6 carbon atoms and containing at least one hydroxy group.

This invention also relates to a process for preparing a solventless radiation curable coating composition in which component (B) is more broadly defined to comprise a silane selected from the group consisting of

(i) amino-organofunctional silane or mixtures thereof, selected from the group consisting of $X_aSiQNZH_{4-u}$ and $X_aSi\{Q(NHQ')_vNZH_{4-u}$;

(ii) acryloxy-functional silane or mixtures thereof, selected from the group consisting of

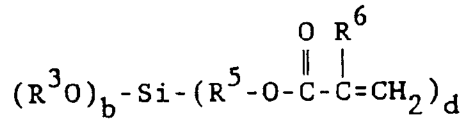

and

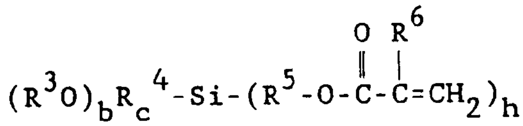 ;

(iii) glycidoxy-functional silane or mixtures thereof, selected from the group consisting of

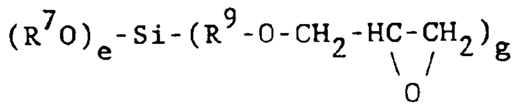

and

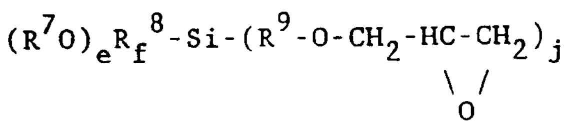

(iv) mixtures of (i), (ii) and (iii).

Component (A) of this novel composition comprises at least one acrylate monomer which contains two or more functional groups selected from the group consisting of acryloxy and methacryloxy groups. These multifunctional acrylate monomers may be used singly or in combination with other multifunctional acrylate monomers. Some preferred multifunctional acrylate monomers useable as component (A) include:

diacrylates of the formulas;

1,6-hexanediol diacrylate,
1,4-butanediol diacrylate,
ethylene glycol diacrylate,
diethylene glycol diacrylate,
tetraethylene glycol diacrylate,
tripropylene glycol diacrylate,
neopentyl glycol diacrylate,
1,4-butanediol dimethacrylate,
poly(butanediol) diacrylate,
tetraethylene glycol dimethacrylate,
1,3-butylene glycol diacrylate,
triethylene glycol diacrylate,
triisopropylene glycol diacrylate,
polyethylene glycol diacrylate,
bisphenol A dimethacrylate,

triacrylates of the formulas;

trimethylolpropane triacrylate,
trimethylolpropane trimethacrylate,
pentaerythritol monohydroxy triacrylate,
trimethylolpropane triethoxy triacrylate,

tetraacrylates of the formulas;

pentaerythritol tetraacrylate,
di-trimethylolpropane tetraacrylate,

pentaacrylates of the formulas;

dipentaerythritol (monohydroxy) pentaacrylate. These multifunctional acrylate monomers are commercially available from Aldrich Chemical Company, Inc., Milwaukee, Wisconsin.

The second component (B) for purposes of conducting the process of this invention comprises a silane selected from the group consisting of amino-organofunctional silane or mixtures thereof, acryloxy-functional silane or mixtures thereof, glycidoxy-functional silane or mixtures thereof and any combination of the above silanes. The amino-organofunctional silane or mixtures thereof, is selected from the group consisting of $X_a$-$SiQNZH_{4-u}$ and $X_aSi\{Q(NHQ^1)_vNZH_{4-u}$ wherein:

X is selected from alkoxy groups having 1-6 carbon atoms;

Q and $Q^1$ are the same or different divalent hydrocarbon groups;

Z is a hydrogen or a monovalent hydrocarbon group;

u is an integer from 1 to 3; and

v is an integer from 1 to 6.

Preferred for this invention are monoamines and diamines, that is amines wherein v is 0 or 1. Specific examples of the most preferred amino-organofunctional silanes are:

N-(2-aminoethyl-3-aminopropyl)trimethoxysilane

3-aminopropyltriethoxysilane

3-aminopropyltrimethoxysilane

anilinopropyltrimethoxysilane.

These amino-organofunctional silanes are commercially available from Petrarch Systems, Inc., Bristol, PA.

The second component (B) of this composition may also be an acryloxy-functional silane instead of an amino-organofunctional silane or it may be a mixture of both types of silanes. The acryloxy-functional silane or mixtures thereof, is selected from the group consisting of

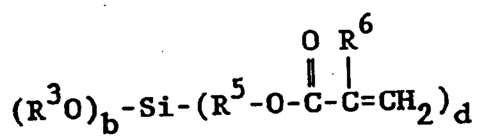

and

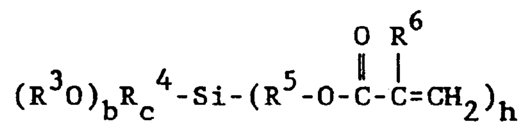

$R^3$ and $R^4$ are the same or different monovalent hydrocarbon radicals;

$R^5$ is a divalent hydrocarbon radical having from 2 to 8 carbon atoms;

$R^6$ is hydrogen or a monovalent hydrocarbon radical;

b is an integer from 1 to 3;

c is an integer from 1 to 2;

d is an integer equaling 4-b; and

h is an integer equaling 4-b-c.

Preferably, R3 and R4 will be lower alkyl radicals such as methyl, ethyl, propyl, etc., but they may also be other saturated and unsaturated species including vinyl, aryl, etc. In many of the embodiments of the present invention, b will ordinarily be 3 and d will equal 1. Specific examples of the most preferred acryloxy-functional silanes are:

3-methacryloxypropyltrimethoxysilane

3-acryloxypropyltrimethoxysilane

2-methacryloxyethyltrimethoxysilane

2-acryloxyethyltrimethoxysilane

3-methacryloxypropyltriethoxysilane

3-acryloxypropyltriethoxysilane

2-methacryloxyethyltriethoxysilane

2-acryloxyethyltriethoxysilane.

These acryloxy-functional silanes are commercially available from Petrarch Systems, Inc., Bristol, PA.

The second component (B) of this composition may also be a glycidoxy-functional silane instead of an amino-organofunctional silane or acryloxy-functional silane or it may be a mixture of these silanes. A glycidoxy-functional silane or mixtures thereof, is selected from the group consisting of

$$(R^7O)_e\text{-Si-}(R^9\text{-O-}CH_2\text{-}\underset{\backslash\ O\ /}{HC\text{-}CH_2})_g$$

and

$$(R^7O)_eR_f^8\text{-Si-}(R^9\text{-O-}CH_2\text{-}\underset{\backslash\ O\ /}{HC\text{-}CH_2})_j$$

wherein:

$R^7$ and $R^8$ are the same or different monovalent hydrocarbon radicals;
$R^9$ is a divalent hydrocarbon radical having from 2 to 8 carbon atoms;
e is an integer from 1 to 3;
f is an integer from 1 to 2;
g is an integer equaling 4-e; and
j is an integer equaling 4-e-f.

Specific examples of the most preferred glycidoxy-functional silanes are:

3-glycidoxypropyltrimethoxysilane
2-glycidoxyethyltrimethoxysilane
3-glycidoxypropyltriethoxysilane
2-glycidoxyethyltriethoxysilane.

These glycidoxy-functional silanes are commercially available from Petrarch Systems, Inc., Bristol, PA.

The third component (C) of this composition comprises an aqueous dispersion of colloidal silica. Colloidal silica is a dispersion of submicron-sized silica ($SiO_2$) particles in water and/or other solvent medium. The colloidal silicas used in this composition are dispersions of submicron size silica ($SiO_2$) particles in water or in a water/organic solvent mixture. Colloidal silica is available in acid or basic form. Either form may be utilized. An example of satisfactory colloidal silica for use in these coating compositions is Nalco 1034A colloidal silica (Nalco 1034A), Nalco 1129 colloidal silica (Nalco 1129), Nalco 2327 colloidal silica (Nalco 2327), Nalco 2326 colloidal silica (Nalco 2326) and Nalco 1140 colloidal silica (Nalco 1140), which can be obtained from Nalco Chemical Company, Naperville, IL.

Nalco 1034A has a mean particle size of 20 nm and an $SiO_2$ content of approximately 34% by weight in water with a pH of approximately 3.1. Nalco 1129 has a mean particle size of 20nm and an $SiO_2$ content of approximately 30% by weight in a solution of 40% isopropanol and 30% water. Nalco 2327 has a mean particle size of 20nm and an $SiO_2$ content of approximately 40% by weight in water with a pH of approximately 9.3 and ammonium as the stabilizing ion. Nalco 2326 has a mean particle size of 5nm and an $SiO_2$ content of approximately 14.5% by weight in water with a pH of approximately 9.0 and ammonium as the stabilizing ion. Nalco 1140 has a mean particle size of 15nm and an $SiO_2$ content of approximately 40% by weight in water with a pH of approximately 9.7 and sodium as the stabilizing ion.

The fourth component (D) of this composition comprises a monofunctional acrylate monomer. Such monomers when proper amounts are used, have been found to act as reactive diluents. For the purposes herein, acrylate monomers of component (D) are limited to acrylate monomers of the general formula $H_2C=C(R^1)COOR^2$ wherein:

$R^1$ is hydrogen or a monovalent hydrocarbon radical;

$R^2$ is selected from the group consisting of hydrogen, a monovalent hydrocarbon radical having from 1 to 6 carbon atoms and a monovalent hydrocarbon radical having from 1 to 6 carbon atoms and containing at least one hydroxy group. Preferred acrylate monomers for the purposes herein include, for example, acrylic acid, methylacrylate, methylmethacrylate, methacrylic acid, hydroxyethylacrylate, hydroxyethylmethacrylate and hydroxypropylacrylate. The acrylate monomer may be added singly or in combination with other acrylate monomers.

The acrylate monomer should be added to the residue, which remains after all solvents have been removed from the coating composition containing parts (A), (B) and (C). The amount of acrylate monomer used has been

determined to be a critical factor in improving the viscosity while maintaining the abrasion resistant properties of the coating compositions. The amount of acrylate monomer added depends to a large extent on the type of acrylate monomer used. Where acrylic acid is used, best results are obtained where the monomer is employed in amounts of up to about 60.0 weight percent of the solventless residue. Where methylmethacrylate is used, best results are obtained where the monomer is employed in amounts up to about 30.0 weight percent of the solvent less residue. Acrylate monomers added in amounts within these ranges result in coating compositions which are easily applied to solid substrates by such commercially popular coating techniques as roller, spray, dip or flow coating and yield transparent abrasion resistant coatings. Acrylate monomers added in amounts outside of these ranges result in coating compositions which appear hazy and/or which are soft.

Other additives can be added to the compositions in order to enhance the usefulness of the coatings. For example, leveling agents, ultraviolet light absorbers, hindered amine light stabilizers (HALS), dyes and the like can be included herein. All of these additives and the use thereof are well known in the art and do not require extensive discussions. Therefore, only a limited number will be referred to, it being understood that any of these compounds can be used so long as they do not deleteriously effect the radiation curing of the coating composition and do not adversely effect the transparency of the coating.

A particularly desirable additive has been found to be a small amount of a leveling agent. Leveling agents can be used on the substrates to cover surface irregularities and aid in the uniform dispersion of the coating composition. These agents are especially useful in compositions where all the solvent has been removed. For purposes of the present invention, the addition of 0.01 to 5.0 percent commercial silicone glycol leveling agents, work well to provide the coating composition with desirable flowout and wetting properties.

Also useful as additives to the present coating compositions are UV absorbers. absorbers act to diminish the harmful effects of UV radiation on the final cured product and thereby enhance the weatherability or resistance to cracking, yellowing and delamination of the coating. Incorporating UV absorbers into the instant compositions will permit the curing process regardless of whether UV or electron beam radiation is used to cure the composition. However, in the situation where UV radiation is to be used to cure the composition, the amount of UV absorbers added must be carefully controlled so as not to hinder the cure. This limitation does not exist in the case of electron beam radiation cure.

For the purpose of the present compositions the following UV absorbers and combinations thereof in concentrations of less than 20 weight percent based on the total composition, have been shown to produce desirable results: bis(1,2,2,6,6-pentamethyl-4-piperidinyl)(3,5-bis-(1,1-dimethylethyl-1,4-hydroxyphenyl)methyl)butylpropanedioate, 2-ethylhexyl-2-cyano-3,3'-diphenylacrylate, 2-hydroxyl-4-n-octoxybenzophenone, 2-(2'-hydroxy-5'-methylphenyl)benzotriazole and poly(oxy-1,2-ethanediyl),alpha-(3-(3-(2H-benzotriazol-2-yl)-5-(1,1-dimethylethyl)-4-hydroxylphenyl)-1-oxopropyl)omega-hydroxy. Concentrations of UV absorbers, however, in the range of 1 to 5 percent based on the total weight of the composition are preferred.

In the practice of the present invention, the radiation curable compositions can be made by combining the multifunctional acrylate monomer or mixtures thereof with a given quantity of alcohol. Suitable alcohols, for example, include any water soluble or water miscible alcohol, for example, methanol, ethanol, propanol, butanol, etc. or ether alcohols, such as ethoxyethanol, butoxyethanol, methoxypropanol, etc. For purposes of the present invention, applicants prefer to use isopropanol.

Generally, the manner in which these components are mixed together is not important. The silane is added dropwise to the mixture while agitation is applied. A small amount of organic acid may, optionally, be added dropwise to the mixture at this time. Suitable acids include, for example, acrylic acid, acetic acid and benzoic acid, etc. The colloidal silica is then added while agitation is applied to the mixture. The solvents are removed by vacuum stripping at 35°C. and 2mm Hg. To the residue that remains after all the solvents have been removed, the acrylate monomers are added by means of a pipet.

According to the coating process of the present invention, the above described compositions are coated on a substrate using conventional coating techniques modified as appropriate to the particular substrate. For example, these compositions can be applied to a variety of solid substrates by methods such as roller coating, flow coating, dip coating, spin coating, spray coating and curtain coating. These various methods of coating allow the compositions to be placed on the substrate at variable thicknesses thus allowing a wider range of use of the compositions. Coating thicknesses may vary, but for improved abrasion resistance coating thicknesses of 2-25 microns, preferably about 5 microns, are recommended.

The compositions are then cured by either ultraviolet or electron beam radiation. The compositions may be ultraviolet light cured if one or more photoinitiators is added prior to curing. Oxygen inhibitors, which are materials used in conjunction with photoinitiators that increase their efficiency, may also be added. Examples of well known oxygen inhibitors include, methyldiethanolamine, triethanolamine, available from Aldrich Chemical Company, Milwaukee, WI. and 2-ethylhexyl-para-dimethylaminobenzoate, available under the tradename UVATONE 8303, from The UpJohn Company, North Haven, CT.

There are no special restrictions on the photoinitiators as long as they can generate radicals by the absorption of optical energy. Ultraviolet light sensitive photoinitiators or blends of initiators which may be used in the UV cure of the present composition include 2-hydroxy-2-methyl-1-phenyl-propan-1-one (Darocur 1173), sold by EM Industries, Inc., Hawthorne, New York and 2,2-dimethoxy-2-phenyl-acetyl-phenone (Urgacure 651), sold by Ciba-Geigy Corporation, Hawthorne, New York. For purposes of this invention, it has been found that from 0.05 to 5 weight percent based on the total solids in the composition, of the photoinitiators described herein will cause the composition to cure. Desirable hard, transparent coatings having excellent adhesion can thus be obtained when the composition of this invention is applied to a substrate and exposed to radiation such as that provided by UV lamps.

When the aforementioned photoinitiators and oxygen inhibitors are used, these additives are individually mixed with either the aforementioned mixtures before the solvents have been removed or to the residue remaining after the removal of solvents.

Alternatively, the coating composition may be electron beam radiation cured. Electron beam sources of various types such as van de Graaff-type, resonance transformer-type, linear-type, dynatron-type and high frequency-type can be used as a source of electron beam. Electron beam having energy of from 50 to 1000 KeV, preferably from 100 to 300 KeV discharged therefrom may be irradiated in a dose of from 0.1 to 10.0 Mega Rads (MR). A particularly preferred source of electron beam is one wherein a continuous curtain-like beam is irradiated from linear filaments. Examples of commercially available sources of electron beam are Electro Curtain CB-150 available from Energy Sciences Inc. and NP-ESH 150 available from Otto Durr.

The curable composition obtained in the process of the present invention is coated on the surface of a substrate (e.g., polycarbonate, etc.). After said composition has been ultraviolet light or electron beam treated, a cured coating film is formed.

By choice of the proper formulation and application conditions including the optional use of a leveling agent, the compositions can be applied and will adhere to substantially all solid substrates. Substrates which are especially contemplated herein are transparent and nontransparent plastics and metals. More particularly, these plastics are synthetic organic polymeric substrates such as acrylic polymers like poly(methylmethacrylate); polyesters, such as poly(ethlene terephthalate), poly (butylene terephthalate), etc.; polyamides; polyimides; acrylonitrile-styrene copolymers; styrene-acrylonitrile-butadiene copolymers; polyvinyl chloride; butyrates; polyethylene; polyolefins and the like including modifications thereof. The compositions of this invention are especially useful as transparent coatings for polycarbonates such as poly(bisphenol-A carbonate) and those polycarbonates known as Lexan (R), sold by General Electric Company, Schenectady, New York; and as coatings for acrylics such as polymethyl-methacrylates. Metal substrates on which the present compositions are also effective include bright and dull metals like aluminum and bright metallized surfaces like sputtered chromium alloy. Other solid substrates contemplated herein include wood, painted surfaces, leather, glass, ceramics, textiles and paper.

The apparatus and testing procedures used for the results shown herein are as follows:

Abrasion resistance was determined according to ASTM Method D-1044 ("Tabor Test"). The instrument used was a Teledyne Taber model 503 Taber Abraser with two 250 gram auxiliary weights (500 gram load) for each of the CS10F abrasive wheels. The acrylic and polycarbonate test panels were subjected to 100 and 500 cycles on the abraser turntable. The percent change in haze which is the criterion for determining the abrasion resistance of the coating is determined by measuring the difference in haze of the unabrased and abrased coatings. Haze is defined as the percentage of transmitted light which, in passing through the sample, deviates from the incident beam by forward scattering. In this method, only light flux that deviates more than 2.5 degrees on the average is considered to be haze. The percent haze on the coatings was determined by ASTM Method D1003. A Gardner Haze Meter was used. The haze was calculated by measuring the amount of diffused light, dividing by the amount of transmitted light and multiplying by one hundred.

Adhesion was measured by cross-hatch adhesion. In this test, a series of cross-hatch scribes are made in an area of one square inch with lines to form 1/10 inch squares. This surface is covered with 1.0 inch No. 600 Scotch Brand adhesive tape which is pressed down firmly over the cross-hatched area. The tape is withdrawn from the surface of the substrate with one rapid motion at about a 90° angle. This action of applying and removing the tape is carried out three times and then the substrate is observed. The number of squares remaining intact on the substrate are reported as a percentage of the total number of squares on the grid.

The Steel Wool Test was conducted as follows: A two inch square of 0000 steel wool was applied over the face of a 24 oz. hammer and was secured with a rubber band. Coated sample blanks were tested for scratch resistance to 20 double rubs across the center of the sample with the weighted steel wool. The hammer is held by the end of its handle such that the majority of the pressure on the steel wool comes from the hammer head. The sample is graded according to the amount of scratching produced by the steel wool and hammer. The absence of scratches on the sample is graded a 1; slight scratching is graded a 2 and heavy scratching

is graded a 3.

The Pencil Test is meant to be a qualitative method of determining scratch resistance of a coating. A coated panel is placed on a firm horizontal surface. A pencil is held firmly against the film at a 45° angle (point away from the operator) and pushed away from the operator in a 1/4-in. (6.5-mm) stroke. The process is started with the hardest lead pencil and continued down the scale of hardness to the pencil that will not cut into or gouge the film. The hardest pencil that will not cut through the film to the substrate for a distance of at least 1/8 in. (3mm) is reported according to the following scale from Berol Corporation, Brentwood, TN.:

```
-----------softer-----      -------------harder-------------
6B, 5B, 4B, 3B, 2B, B, HB, F, H, 2H, 3H, 4H, 5H, 6H,7H,8H,9H
```

The HB grade is approximately equal to that of a #2 pencil. The F grade is slightly harder and is the one most commonly used. The H grades are harder than that and get progressively harder up through the 9H grade which is very hard. The B grade is softer than the HB grade and get progressively softer through the 6B grade which is very soft.

The kinematic viscosity of liquids was determined by measuring the time required for a fixed volume of sample to pass through a calibrated glass capillary using "gravity flow" in a constant temperature bath set at 25°C. The method is based on ASTM D-445 and IP 71 and the results are reported in centiStokes.

In order that those skilled in the art may better understand how to practice the present invention, the following examples are given by way of illustration and not by way of limitation. All parts and percentages in the examples are on a weight basis.

Example 1

A mixture of 5.77 g of 3-methacryloxypropyl trimethoxysilane, 84.00 g of isopropanol, 9.68 g of hexanedioldiacrylate and 7.56 g of trimethylolpropanetriacrylate was prepared. To this mixture was added 0.46 g of glacial acetic acid. The mixture was then allowed to stand for five minutes. Next, 16.68 g of Nalco 1034A was added while the mixture underwent agitation. The mixture was then allowed to stand for 24 hours, before being vacuum stripped at 35°C. and 2mm Hg, until all volatiles were removed. Test results on this residue, after curing, are listed under Example 1(A). Different types and percentages of acrylates were added to the residue to give the final percentages as listed in Table I. All of the examples were flow coated onto 4 x 4 polycarbonate panels and electron beam cured under 4MR, 160KeV electron dose at a belt speed of 68 feet per minute under a six inch wide electron beam operated with a 4 milliamp electron current in a nitrogen atmosphere containing 200 ppm oxygen.

The acrylate monomer ratios and test results are summarized in Table I.

TABLE I

Properties of Coated Polycarbonate

| Coating Compositions | AA% | MMA% | ADHESION TEST | STEEL WOOL | PENCIL TEST % | ABRASION TEST $H_{100}$% | H500 | Visc cS |
|---|---|---|---|---|---|---|---|---|
| Example 1(A) | 0.0 | 0.0 | 100% | 1 | HB | 2.1 | 6.3 | 208.7cS |
| Example 1(B) | 0.0 | 20.0 | 100% | 2 | HB | 2.4 | 8.6 | 14.4cS |
| Example 1(C) | 50.0 | 0.0 | 100% | 2 | HB | 5.0 | 18.1 | 7.4cS |
| **Comparison Examples** | | | | | | | | |
| Example 1(D) | 0.0 | 75.0 | Cured panel was hazy, soft and easily scratched | | | | | |
| Example 1(E) | 0.0 | 50.0 | Sample was clear and did not cure | | | | | |
| Example 1(F) | 0.0 | 40.0 | Cured panel was hazy, soft and easily scratched | | | | | |
| Example 1(G) | 0.0 | 30.0 | Cured panel was hard and exhibited many haze spots | | | | | |
| Example 1(H) | 75.0 | 0.0 | Cured panel was clear, soft and easily scratched | | | | | |

As the results of Table I clearly indicate, monofunctional acrylate monomers dramatically decrease the viscosity of the coating compositions while the cured coating films exhibited excellent abrasion resistant properties. However, as the comparative examples show, the monofunctional acrylate monomers must not exceed certain weight percents as defined by the type of acrylate monomer used.

## Example 2

A mixture of 4.41 g of aminopropyltrimethoxysilane, 168.30 g of t-butanol, 22.24 g of hexanedioldiacrylate and 22.25 g of trimethylolpropanetriacrylate was allowed to stand at room temperature for 72 hours. To this mixture was added 0.92 g of glacial acetic acid. The mixture was then allowed to stand for five minutes. Next, 33.70 g of Nalco 1034A was added while the mixture underwent agitation. The mixture was then allowed to stand for 24 hours, before being vacuum stripped at 35°C. and 2mm Hg, until all volatiles were removed. Test results on this residue, after curing, are listed under Example 2(A). Different types and percentages of acrylates were added to the residue to give the final percentages as listed in Table II. The resulting mixtures were flow coated onto 4 x 4 polycarbonate panels and electron beam cured under 4MR, 160KeV electron dose at a belt speed of 68 feet per minute under a six inch wide electron beam operated with a 4 milliamp electron current in a nitrogen atmosphere containing 200 ppm oxygen.

The acrylate monomer ratios and test results are summarized in Table II.

TABLE II

Properties of Coated Polycarbonate

| Coating Compositions | AA% | MMA% | ADHESION TEST | STEEL WOOL | PENCIL TEST % | ABRASION TEST $H_{100}$% | H500 | Visc cS |
|---|---|---|---|---|---|---|---|---|
| Example 2(A) | 0.0 | 0.0 | 100% | 1 | HB | 2.4 | 9.8 | 1725.5cS |
| Example 2(B) | 0.0 | 20.0 | 100% | 2 | HB | 0.6 | 4.6 | 128.9cS |
| Example 2(C) | 50.0 | 0.0 | 100% | 1 | HB | 1.4 | 9.6 | 4.3cS |

As the results of Table II clearly indicate, amino-organofunctional silane coating compositions produce a much more viscous resin following removal of the solvents than do the acryloxy-functional silane compositions in Example I. The monofunctional acrylate monomers show an even greater effect, in this case, of decreasing the viscosity of the coating film. In addition, the monofunctional acrylate monomers do not significantly alter the abrasion resistant properties of the amino-organofunctional silane coating compositions. Furthermore, improved abrasion resistance resulted from the use of monofunctional acrylate monomers, as shown by Example 2(B).

Example 3

A mixture of 3.24 g of aminopropyltrimethoxysilane, 154.38 g of isopropanol, 4.08 g of hexanedioldiacrylate and 11.37 g of trimethylolpropanetriacrylate was allowed to stand at room temperature for 72 hours. To this mixture was added 0.69 g of glacial acetic acid. The mixture was then allowed to stand for five minutes. Next, 33.72 g of Nalco 1034A was added while the mixture underwent agitation. The mixture was then allowed to stand for 24 hours, before being vacuum stripped at 35°C. and 2mm Hg, until all volatiles were removed. Test results on this residue, after curing, are listed under Example 3(A). Different types and percentages of acrylates were added to the residue to give the final percentages as listed in Table III. Examples (A), (B) and (C) were flow coated onto 4 x 4 polycarbonate panels and electron beam cured under 4MR, 160KeV electron dose at a belt speed of 68 feet per minute under a six inch wide electron beam operated with a 4 milliamp electron current in a nitrogen atmosphere containing 200 ppm oxygen. To Examples (D) and (E), was added 2.00 g of DAROCUR 1173, sold by EM Industries, Inc., Hawthorne, N.Y. and 0.40 g of methyldiethanolamine, sold by Aldrich Chemical Company, Milwaukee, WI. Examples (D) and (E) were then flow coated onto 4 x 4 polycarbonate panels and UV cured by passing the samples through a medium pressure mercury vapor arc lamp with an average intensity of 91.56 $mW/cm^2$ at a line speed of three feet per minute.

The acrylate monomer ratios and test results are summarized in Table III.

TABLE III

Properties of Coated Polycarbonate

| Coating Compositions | AA% | MMA% | ADHESION TEST | STEEL WOOL | PENCIL TEST % | ABRASION TEST $H_{100}$% | H500 | Visc cS |
|---|---|---|---|---|---|---|---|---|
| Example 3(A) | 0.0 | 0.0 | 100% | 1 | HB | 2.1 | 5.1 | 1904.6 cS |
| Example 3(B) | 0.0 | 20.0 | 100% | 1 | HB | 1.5 | 9.0 | 113.6 cS |
| Example 3(C) | 50.0 | 0.0 | 100% | 2 | HB | 2.0 | 9.9 | 20.7 cS |
| Example 3(D) | 0.0 | 20.0 | 100% | 2 | HB | 1.8 | 8.2 | 113.6 cS |
| Example 3(E) | 50.0 | 0.0 | 100% | 2 | HB | 5.8 | 20.3 | 20.7 cS |

As the results of Table III clearly indicate, monofunctional acrylate monomers dramatically decrease the viscosity of the coating compositions, however, the cured coating films exhibited excellent abrasion resistant properties. Furthermore, excellent results were obtained whether the coating compositions were cured by ultraviolet light or electron beam radiation. Electron beam radiation may, however, in certain cases, lead to a more complete cure and therefore greater abrasion resistance as Example 3(C) highlights when compared to Example 3(E) which was UV cured.

Many variations will suggest themselves to those skilled in this art in light of the above detailed description. All such obvious modifications are within the full intended scope of the appended claims.

## Claims

1. A solventless radiation curable coating composition comprising:
   (A) at least one multifunctional acrylate monomer;
   (B) an amino-organofunctional silane selected from the group consisting of
   (i) an amino-organofunctional silane or mixtures thereof, selected from the group consisting of $X_uSi(QNZH)_{4-u}$ and $X_uSi[Q(NHQ^1)_vNZH]_{4-u}$,
   (ii) mixtures of (i) with an acryloxy-functional silane, selected from the group consisting of

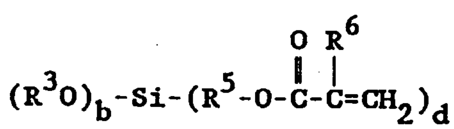

and

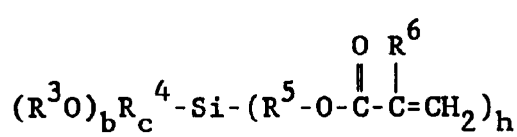

(iii) mixtures of (i) with a glycidoxy-functional silane, selected from the group consisting of

$$(R^7O)_e\text{-}Si\text{-}(R^9\text{-}O\text{-}CH_2\text{-}\underbrace{HC\text{-}CH_2}_{O})_g$$

and

$$(R^7O)_eR_f^8\text{-}Si\text{-}(R^9\text{-}O\text{-}CH_2\text{-}\underbrace{HC\text{-}CH_2}_{O})_j$$

(iv) mixtures of (ii) and (iii);
wherein:

X is selected from alkoxy groups having 1-6 carbon atoms;
Q and $Q^1$ are the same or different divalent hydrocarbon groups;
Z is a hydrogen or a monovalent hydrocarbon group;
$R^3$ and $R^4$ are the same or different monovalent hydrocarbon radicals;
$R^5$ is a divalent hydrocarbon radical having from 2 to 8 carbon atoms;
$R^6$ is hydrogen or a monovalent hydrocarbon radical;
$R^7$ and $R^8$ are the same or different monovalent hydrocarbon radicals;
$R^9$ is a divalent hydrocarbon radical having from 2 to 8 carbon atoms;
u is an integer from 1 to 3;
v is an integer from 1 to 6;
b is an integer from 1 to 3;
c is an integer from 1 to 2;
d is an integer equaling 4-b;
e is an integer from 1 to 3;
f is an integer from 1 to 2;
g is an integer equaling 4-e;
h is an integer equaling 4-b-c;
j is an integer equaling 4-e-f;

(C) aqueous dispersion of colloidal silica; and
(D) acrylate monomer of the formula $H_2C=C(R^1)COOR^2$ wherein:

$R^1$ is hydrogen or a monovalent hydrocarbon radical;
$R^2$ is selected from the group consisting of hydrogen, a monovalent hydrocarbon radical having from 1 to 6 carbon atoms and a monovalent hydrocarbon radical having from 1 to 6 carbon atoms and containing at least one hydroxy group.

**2.** A composition as claimed in claim 1 which additionally contains an organic acid.

**3.** A composition as claimed in claim 1 which additionally contains one or more materials selected from the group consisting of leveling agents, UV absorbers, hindered amine light stabilizers and oxygen inhibitors.

**4.** The product obtained by the cure of the composition of claim 1. and

$$(R^7O)_eR_f^8\text{-}Si\text{-}(R^9\text{-}O\text{-}CH_2\text{-}\underbrace{HC\text{-}CH_2}_{O})_j$$

(iv) mixtures of (i), (ii) and (iii); wherein:

X is selected from alkoxy groups having 1-6 carbon atoms;
Q and $Q^1$ are the same or different divalent hydrocarbon groups;
Z is a hydrogen or a monovalent hydrocarbon group;
X is selected from alkoxy groups having 1-6 carbon atoms;
$R^3$ and $R^4$ are the same or different monovalent hydrocarbon radicals;

$R^5$ is a divalent hydrocarbon radical having from 2 to 8 carbon atoms;
$R^6$ is hydrogen or a monovalent hydrocarbon radical;
$R^7$ and $R^8$ are the same or different monovalent hydrocarbon radicals;
$R^9$ is a divalent hydrocarbon radical having from 2 to 8 carbon atoms;
u is an integer from 1 to 3;
v is an integer from 1 to 6;
b is an integer from 1 to 3;
c is an integer from 1 to 2;
d is an integer equaling 4-b;
e is an integer from 1 to 3;
f is an integer from 1 to 2;
g is an integer equaling 4-e;
h is an integer equaling 4-b-c;
j is an integer equaling 4-e-f;

5. A process for preparing a solventless radiation curable coating composition comprising:
(I) combining
(A) at least one multifunctional acrylate monomer;
(B) a silane selected from the group consisting of
(i) amino-organofunctional silane or mixtures thereof, selected from the group consisting of $X_uSi(QNZH)_{4-u}$ and $X_uSi[Q(NHQ^1)_vNZH]_{4-u}$
(ii) acryloxy-functional silane or mixtures thereof, selected from the group consisting of

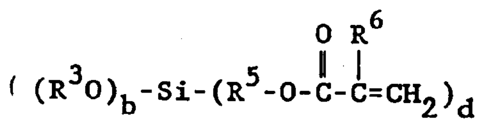

and

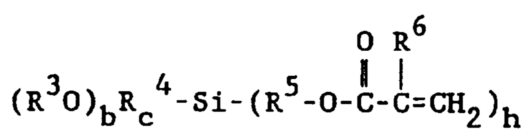

(iii) glycidoxy-functional silane or mixtures thereof, selected from the group consisting of

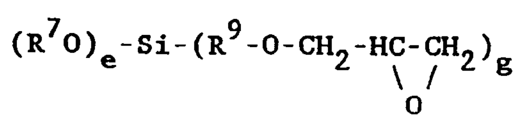

(II) mixing the product of (I) with an aqueous dispersion of colloidal silica; and thereafter,
(III) removing residual solvent at reduced pressure; and thereafter,
(IV) adding acrylate monomer of the formula $H_2C=C(R^1)COOR^2$ wherein:
$R^1$ is hydrogen or a monovalent hydrocarbon radical;
$R^2$ is selected from the group consisting of hydrogen, a monovalent hydrocarbon radical having from 1 to 6 carbon atoms and a monovalent hydrocarbon radical having from 1 to 6 carbon atoms and containing at least one hydroxy group.

6. A solid substrate having at least one surface coated with the cured composition of claim 1.

## Patentansprüche

1. Lösungsmittelfreies, strahlungshärtendes Beschichtungsmittel, enthaltend
(A) mindestens ein multifunktionelles Acrylatmonomeres;

(B) ein aminoorgano-funktionelles Silan, ausgewählt aus der Gruppe, bestehend aus

(i) einem aminoorgano-funktionellen Silan der Formeln $X_uSi(QNZH)_{4-u}$ oder $X_uSi\,Q(NHQ^1)_vNZH_{4-u}$ oder einem Gemisch aus solchen Silanen;

(ii) Gemischen aus (i) mit einem acryloxy-funktionel- len Silan, ausgewählt aus der Gruppe, bestehend aus

$$(R^3O)_b\text{-Si-}(R^5\text{-O-}\overset{O}{\overset{\|}{C}}\text{-}\overset{R^6}{\overset{|}{C}}\text{=CH}_2)_d$$

und

$$(R^3O)_bR^4_c\text{-Si-}(R^5\text{-O-}\overset{O}{\overset{\|}{C}}\text{-}\overset{R^6}{\overset{|}{C}}\text{=CH}_2)_h$$

(iii) Gemischen aus (i) mit einem glycidoxy-funktionellen Silan, ausgewählt aus der Gruppe, bestehend aus

$$(R^7O)_e\text{-Si }(R^9\text{-O-CH}_2\text{-}\underset{O}{\underbrace{\text{HC-CH}_2}})_g$$

und

$$(R^7O)_eR^8_f\text{-Si-}(R^9\text{-O-CH}_2\text{-}\underset{O}{\underbrace{\text{HC-CH}_2}})_j$$

(iv) Gemischen aus (i) und (iii);

wobei

X eine Alkoxygruppe mit 1 bis 6 Kohlenstoffatomen bezeichnet;

Q und $Q^1$ gleiche oder verschiedene zweiwertige Kohlenwasserstoffreste bezeichnen;

Z für Wasserstoff oder einen einwertigen Kohlenwasserstoffrest steht;

$R^3$ und $R^4$ gleiche oder verschiedene einwertige Kohlenwasserstoffreste bedeuten;

$R^5$ für einen zweiwertigen Kohlenwasserstoffrest mit 2 bis 8 Kohlenstoffatomen steht;

$R^6$ Wasserstoff oder einen einwertigen Kohlenwasserstoffrest bezeichnet;

$R^7$ und $R^8$ gleiche oder verschiedene einwertige Kohlenwasserstoffreste bedeuten;

$R^9$ für einen zweiwertigen Kohlenwasserstoffrest mit 2 bis 8 Kohlenstoffatomen steht;

u eine ganze Zahl von 1 bis 3 bezeichnet;

v eine ganze Zahl von 1 bis 6 bezeichnet;

b eine ganze Zahl von 1 bis 3 bezeichnet;

c eine ganze Zahl von 1 bis 2 bezeichnet;

d eine ganze Zahl bezeichnet und gleich 4-b ist;

e eine ganze Zahl von 1 bis 3 bezeichnet;

f eine ganze Zahl von 1 bis 2 bezeichnet;

g eine ganze Zahl bezeichnet und gleich 4-e ist;

h eine ganze Zahl bezeichnet und gleich 4-b-c ist;

j eine ganze Zahl bezeichnet und gleich 4-e-f ist;

(C) eine wässerige Dispersion von kolloidalem Siliziumdioxid; und

(D) ein Acrylatmonomeres der Formel $H_2C{=}C(R^1)COOR^2$, in der

$R^1$ Wasserstoff oder einen einwertigen Kohlenwasserstoffrest bezeichnet; und

$R^2$ ausgewählt ist aus der Gruppe, bestehend aus Wasserstoff, einwertigen Kohlenwasserstoffresten mit 1 bis 6 Kohlenstoffatomen und einwertigen Kohlenwasserstoffresten mit 1 bis 6 Kohlenstoffatomen sowie mindestens einer Hydroxylgruppe.

2. Beschichtungsmittel nach Anspruch 1, zusätzlich eine organische Säure enthaltend.

3. Beschichtungsmittel nach Anspruch 1, zusätzlich enthaltend einen oder mehrere Stoffe, ausgewählt aus der Gruppe, bestehend aus Egalisiermitteln (levelling agents), UV-Absorbentien, sterisch gehinderten Aminen als Lichtstabilisatoren und Sauerstoffinhibitoren.

4. Produkt, erhalten durch Härtung des Beschichtungsmittels nach Anspruch 1.

5. Verfahren zur Herstellung eines lösungsmittelfreien, strahlungshärtenden Beschichtungsmittels, dadurch gekennzeichnet, daß man

(I) kombiniert

(A) mindestens ein multifunktionelles Acrylatmonomeres;

(B) ein aminoorgano-funktionelles Silan, ausgewählt aus der Gruppe, bestehend aus

(i) einem aminoorgano-funktionellen Silan der Formeln $X_uSi(QNZH)_{4-u}$ oder $X_uSi\ Q(NHQ^1)_vNZH_{4-u}$ oder einem Gemisch aus solchen Silanen;

(ii) Gemischen aus (i) mit einem acryloxy-funktionel- len Silan, ausgewählt aus der Gruppe, bestehend aus

$$(R^3O)_b-Si-(R^5-O-\overset{\overset{O}{\|}}{C}-\overset{\overset{R^6}{|}}{C}=CH_2)_d$$

und

$$(R^3O)_bR^4_c-Si-(R^5-O-\overset{\overset{O}{\|}}{C}-\overset{\overset{R^6}{|}}{C}=CH_2)_h$$

(iii) Gemischen aus (i) mit einem glycidoxy-funktionellen Silan, ausgewählt aus der Gruppe, bestehend aus

$$(R^7O)_e-Si\ (R^9-O-CH_2-\underset{\diagdown O \diagup}{HC-CH_2})_g$$

und

$$(R^7O)_eR^8_f-Si-(R^9-O-CH_2-\underset{\diagdown O \diagup}{HC-CH_2})_j$$

(iv) Gemischen aus (i) und (iii);

wobei

X eine Alkoxygruppe mit 1 bis 6 Kohlenstoffatomen bezeichnet;

Q und $Q^1$ gleiche oder verschiedene zweiwertige Kohlenwasserstoffreste bezeichnen;

Z für Wasserstoff oder einen einwertigen Kohlenwasserstoffrest steht;

$R^3$ und $R^4$ gleiche oder verschiedene einwertige Kohlenwasserstoffreste bedeuten;

$R^5$ für einen zweiwertigen Kohlenwasserstoffrest mit 2 bis 8 Kohlenstoffatomen steht;

$R^6$ Wasserstoff oder einen einwertigen Kohlenwasserstoffrest bezeichnet;
$R^7$ und $R^8$ gleiche oder verschiedene einwertige Kohlen- wasserstoffreste bedeuten;
$R^9$ für einen zweiwertigen Kohlenwasserstoffrest mit 2 bis 8 Kohlenstoffatomen steht;
u eine ganze Zahl von 1 bis 3 bezeichnet;
v eine ganze Zahl von 1 bis 6 bezeichnet;
b eine ganze Zahl von 1 bis 3 bezeichnet;
c eine ganze Zahl von 1 bis 2 bezeichnet;
d eine ganze Zahl bezeichnet und gleich 4-b ist;
e eine ganze Zahl von 1 bis 3 bezeichnet;
f eine ganze Zahl von 1 bis 2 bezeichnet;
g eine ganze Zahl bezeichnet und gleich 4-e ist;
h eine ganze Zahl bezeichnet und gleich 4-b-c ist;
j eine ganze Zahl bezeichnet und gleich 4-e-f ist;

(II) das Produkt der Stufe (I) mit einer wässerigen Dispersion von kolloidalem Siliziumdioxid mischt; danach
(III) restliches Lösungsmittel unter vermindertem Druck entfernt; und danach
(IV) ein Acrylatmonomeres der Formel $H_2C=C(R^1)COOR^2$ zusetzt, in der
$R^1$ Wasserstoff oder einen einwertigen Kohlenwasser- stoffrest bezeichnet; und
$R^2$ ausgewählt ist aus der Gruppe, bestehend aus Wasser- stoff, einwertigen Kohlenwasserstoffresten mit 1 bis 6 Kohlenstoffatomen und einwertigen Kohlenwasserstoffresten mit 1 bis 6 Kohlenstoffatomen sowie mindestens einer Hydroxylgruppe.

6. Festes Substrat mit mindestens einer Oberfläche, die mit dem gehärteten Beschichtungsmittel nach Anspruch 1 beschichtet ist.

## Revendications

1. Composition de revêtement sans solvant, durcissable par rayonnement, comprenant :
(A) au moins un monomère acrylate multifonctionnel ;
(B) un silane à fonctionnalité amino-organique choisi dans le groupe constitué par :
(i) un silane à fonctionnalité amino-organique, ou des mélanges de celui-ci, choisi dans le groupe constitué par $X_uSi(QNZH)_{4-u}$ et $X_uSi[Q(NHQ^1)_vNZH]_{4-u}$ ,
(ii) des mélanges de (i) avec un silane à fonctionnalité acryloxy, chosisi dans le groupe constitué par

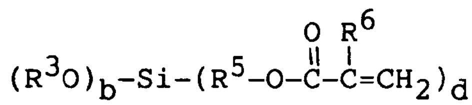

et

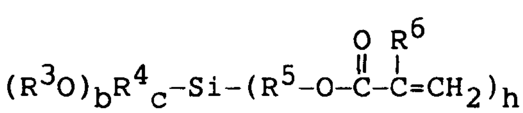

(iii) des mélanges de (i) avec un silane à fonctionnalité glycidoxy, choisi dans le groupe constitué par

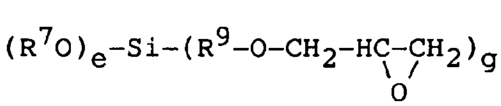

et

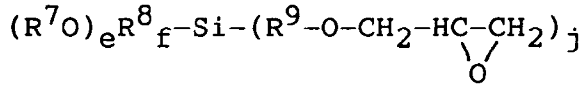

(iv) des mélanges de (ii) et (iii) ;

où :

X est choisi parmi les groupes alcoxy ayant de 1 à 6 atomes de carbone ;

Q et $Q^1$ sont des groupes hydrocarbonés divalents identiques ou différents ;

Z est un atome d'hydrogène ou un groupe hydrocarboné monovalent ;

$R^3$ et $R^4$ sont des radicaux hydrocarbonés monovalents identiques ou différents ;

$R^5$ est un radical hydrocarboné divalent ayant de 2 à 8 atomes de carbone ;

$R^6$ est un atome d'hydrogène ou un radical hydrocarboné monovalent ;

$R^7$ et $R^8$ sont des radicaux hydrocarbonés monovalents identiques ou différents ;

$R^9$ est un radical hydrocarboné divalent ayant de 2 à 8 atomes de carbone ;

u est un nombre entier valant de 1 à 3 ;

v est un nombre entier valant de 1 à 6 ;

b est un nombre entier valant de 1 à 3 ;

c est un nombre entier valant 1 ou 2 ;

d est un nombre entier égal à 4-b ;

e est un nombre entier valant de 1 à 3 ;

f est un nombre entier valant 1 ou 2 ;

g est un nombre entier égal à 4-e ;

h est un nombre entier égal à 4-b-c ;

j est un nombre entier égal à 4-e-f ;

(C) une dispersion aqueuse de silice colloïdale ; et

(D) un monomère acrylate répondant à la formule $H_2C=C(R^1)COOR^2$, dans laquelle :

$R^1$ est un atome d'hydrogène ou un radical hydrocarboné monovalent ;

$R^2$ est choisi dans le groupe constitué par l'hydrogène, un radical hydrocarboné monovalent ayant de 1 à 6 atomes de carbone et un radical hydrocarboné monovalent ayant de 1 à 6 atomes et contenant au moins un groupe hydroxy.

2. Composition selon la revendication 1, contenant, en outre, un acide organique.

3. Composition selon la revendication 1, contenant, en outre, un ou plusieurs matériaux choisis dans le groupe constitué par des agents de lissage, des absorbants d'UV, des stabilisants amines à empêchement stérique contre l'effet de la lumière, et des inhibiteurs d'oxygène.

4. Produit obtenu par durcissement de la composition de la revendication 1.

5. Procédé de préparation d'une composition de revêtement sans solvant, durcissable par rayonnement, comprenant :

(I) la combinaison de :

(A) au moins un monomère acrylate multifonctionnel ;

(B) un silane choisi dans le groupe constitué par :

(i) un silane à fonctionnalité amino-organique, ou des mélanges de celui-ci, choisi dans le groupe constitué par $X_uSi(QNZH)_{4-u}$ et $X_uSi[Q(NHQ^1)_vNZH]_{4-u}$ ,

(ii) un silane à fonctionnalité acryloxy, ou des mélanges de celui-ci, choisi dans le groupe constitué par :

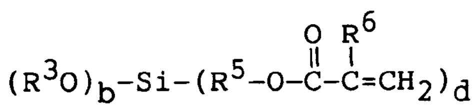

et

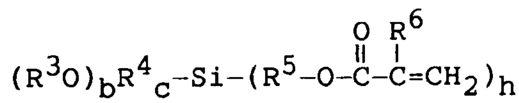

(iii) un silane à fonctionnalité glycidoxy, ou des mélange de celui-ci, choisi dans le groupe constitué par :

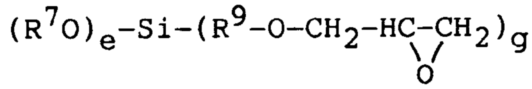

et

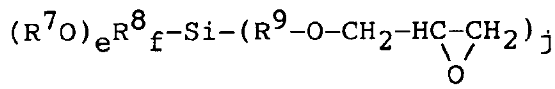

(iv) des mélanges de (i), (ii) et (iii) ; où :

X est choisi parmi les groupes alcoxy ayant de 1 à 6 atomes de carbone ;
Q et $Q^1$ sont des groupes hydrocarbonés divalents identiques ou différents ;
Z est un atome d'hydrogène ou un groupe hydrocarboné monovalent ;
$R^3$ et $R^4$ sont des radicaux hydrocarbonés monovalents identiques ou différents ;
$R^5$ est un radical hydrocarboné divalent ayant de 2 à 8 atomes de carbone ;
$R^6$ est un atome d'hydrogène ou un radical hydrocarboné monovalent ;
$R^7$ et $R^8$ sont des radicaux hydrocarbonés monovalents identiques ou différents ;
$R^9$ est un radical hydrocarboné divalent ayant de 2 à 8 atomes de carbone ;
u est un nombre entier valant de 1 à 3 ;
v est un nombre entier valant de 1 à 6 ;
b est un nombre entier valant de 1 à 3 ;
c est un nombre entier valant 1 ou 2 ;
d est un nombre entier égal à 4-b ;
e est un nombre entier valant de 1 à 3 ;
f est un nombre entier valant 1 ou 2 ;
g est un nombre entier égal à 4-e ;
h est un nombre entier égal à 4-b-c ;
j est un nombre entier égal à 4-e-f ;

(II) le mélange du produit de (I) avec une dispersion aqueuse de silice colloïdale ; et ensuite,
(III) l'élimination du solvant résiduel sous une pression réduite ; et ensuite,
(IV) l'addition d'un monomère acrylate répondant à la formule $H_2C=C(R^1)COOR^2$, dans laquelle :

$R^1$ est un atome d'hydrogène ou un radical hydrocarboné monovalent ;

$R^2$ est choisi dans le groupe constitué par l'hydrogène, un radical hydrocarboné monovalent ayant de 1 à 6 atomes de carbone et un radical hydrocarboné monovalent ayant de 1 à 6 atomes et contenant au moins un groupe hydroxy.

6. Substrat solide ayant au moins une surface revêtue de la composition, durcie, de la revendication 1.